# EUROPÄISCHE PATENTSCHRIFT

(11) **EP 2 327 533 B1**
(45) Veröffentlichungstag und Bekanntmachung des Hinweises auf die Patenterteilung: **22.08.2012**
(21) Anmeldenummer: 10189516.7
(22) Anmeldetag: 29.10.2010
(51) Int. Cl.: B29C 65/18, B65B 7/28, B65B 51/32

(54) **Siegelstation**
Sealing station
Poste de scellage

(30) Priorität: 25.11.2009 DE 102009047151
(43) Veröffentlichungstag der Anmeldung: 01.06.2011
(73) Patentinhaber: Uhlmann Pac-Systeme GmbH & Co. KG, 88471 Laupheim (DE)
(72) Erfinder: Krahl, Wolfgang, 88471 Laupheim (DE); Engelhardt, Ulrich, 88471 Laupheim (DE); Fuchsloch, Guido, 88499 Altheim (DE)
(74) Vertreter: Wächter, Jochen

(56) Entgegenhaltungen:
- WO-A1-85/03487
- JP-A- 11 245 905
- US-A- 5 331 791

## Beschreibung

Die vorliegende Erfindung betrifft eine Siegelstation, insbesondere in einer Thermoformmaschine, zum Siegeln einer Deckfolie auf eine Boden- oder Formfolie mit napfförmigen Vertiefungen zur Aufnahme von Produkten zwischen einem ersten Werkzeug und einem zweiten Werkzeug.

Thermoformmaschinen sind als Bestandteil von Blister-Verpackungsmaschinen bekannt. Sie umfassen eine Formstation, in der in eine Boden- oder Formfolie, die beispielsweise aus Kunststoff oder Aluminium oder einer Mischung davon bestehen kann, eine Vielzahl von napfförmigen Vertiefungen bzw. Näpfen eingeformt werden, in die in einer nachgeschalteten Füllstation jeweils ein Produkt, beispielsweise eine pharmazeutische Tablette, eingelegt wird. Nach der Produktzuführung wird die Bodenfolie einer Siegelstation zugeführt. Unmittelbar vor oder innerhalb der Siegelstation wird eine Deckfolie zugeführt und auf die Bodenfolie aufgelegt. Durch Wärmeeinwirkung innerhalb der Siegelstation wird die Deckfolie dicht auf die Bodenfolie aufgesiegelt, wodurch das Produkt in dem Napf bzw. der napfartigen Vertiefung eingeschlossen ist.

Eine Siegelstation besteht im Allgemeinen aus einem ersten oder oberen Werkzeug, das mittels Heizpatronen erhitzt wird und einem zweiten bzw. unteren Werkzeug, das Ausnehmungen zur Aufnahme der Bodenfolie mit ihren napfförmigen Vertiefungen aufweist und das Gegenstück zum ersten Werkzeug bildet. Weil die sich gegenüber liegenden Flächen von Deck- und Bodenfolie aufeinander gedrückt und dabei zumindest teilweise miteinander verschmolzen werden, kommt es beim Siegeln zu einer starken Wärmeübertragung vom oberen Werkzeug auf die Deckfolie und insbesondere auch auf die Bodenfolie.

Auch wenn die Wärmeübertragung nur während der Siegelzeit auftritt, so hat das Aufheizen des aus Deck- und Bodenfolie bestehenden Folienverbundes durch die sehr gut Wärme leitenden Schichten innerhalb von Deck- und Bodenfolie, deren Material beispielsweise Aluminium aufweist, Auswirkungen auf das in der napfförmigen Vertiefung liegende und vom Folienverbund umschlossene Produkt. Bei bestimmten Produkten, insbesondere z.B. empfindlichen pharmazeutischen Kapseln, darf während des gesamten Verpackungsprozesses eine maximale Temperatur nicht überschritten werden, da es ansonsten zu Produktbeschädigungen bis hin zum Zerfallen kommen kann. Deshalb muss das zweite, untere Werkzeug eine vorbestimmte Kühltemperatur aufweisen, die nicht überschritten werden darf. Gleichzeitig muss direkt nach der Siegelung der Folienverbund abgekühlt werden.

Üblicherweise weisen die unteren Werkzeuge von Thermoformmaschinen zu dem oben genannten Zweck eine Wasserkühlung auf, wobei sich in dem unteren Werkzeug mit Kühlwasser gefüllte Kanäle befinden, die insbesondere dafür sorgen, dass sich das untere Werkzeug durch den Kontakt mit dem aufgeheizten oberen Werkzeug während der Siegelzeit nicht weiter aufheizt, sondern unterhalb einer bestimmten Temperaturschwelle bleibt.

Die US-3,628,306 offenbart eine Vorrichtung zur Verpackung von Artikeln zwischen zwei mittels Hitze versiegelbaren Kunststofffolien. Dabei wird der Folienverbund bei der Versiegelung im produktfreien Versiegelungsbereich durch ein senkrecht zum Folienverbund angeordnetes Messer aufgetrennt. Zur Kühlung des Folienverbundes in diesem Bereich derart, dass ein gleichmäßiges Schneiden gewährleistet ist, sind in dem unteren Werkzeug Luftschlitze vorgesehen. Diese Vorrichtung kühlt jedoch nicht das von dem Folienverbund umschlossene Produkt, sondern lediglich die im Siegelungsbereich liegenden Abschnitte des Folienverbundes. Für besonders wärmeempfindliche Produkte ist eine derartige Vorrichtung deshalb ungeeignet.

Die DE 34 04 451 A1 beschreibt eine Verpackungsmaschine mit einer Evakuier- und Versiegelungsstation zum Verschweißen von Monofolien mit einem dauerbeheizbaren Schweißelement. Damit die Monofolie nicht durch Kontakt mit dem dauerbeheizten Schweißelement zerstört wird, ist eine Steuerung vorgesehen, die so ausgebildet ist, dass sie im Kammerinneren einen Differenzdruck zwischen dem Druck oberhalb der Oberfolie und unterhalb derselben erzeugt, so dass die Oberfolie während und auch noch dem In-Kontakt-Bringen mit dem Schweißelement straff auf Produkt und Unterfolie liegen bleibt. Erst nach einer Abkühlphase wird die Druckdifferenz aufgehoben, so dass die Packung mit der dann wieder stabilisierten Folie abgehoben und weitertransportiert werden kann. Dabei sind in dem unteren Werkzeug der Evakuier- und Versiegelungsstation Kanäle ausgebildet, über die ein Unterdruck erzeugt wird, damit die Folie und das Produkt direkt auf der Oberseite des unteren Werkzeugs anliegt. Diese Evakuier- und Versiegelungsstation kann für Blisterverpackungen mit napfförmigen Vertiefungen in der Bodenfolie nicht verwendet werden, da die äußere Oberfläche der Näpfe ohne Druckstellen oder sonstige Beschädigungen bleiben muss und deshalb ein Kontakt der äußeren Oberfläche der Näpfe mit der Oberfläche der Ausnehmungen im unteren Werkzeug verhindert werden muss. Des Weiteren muss bei dem unteren Siegelwerkzeug eine gewisse Flexibilität bezüglich der Form der Ausnehmungen gegeben sein, da eine exakte Entsprechung von napfartiger Vertiefung in der Bodenfolie mit der Ausnehmung in dem unteren Werkzeug zu höheren Kosten führen würde. Darüber hinaus muss die Ausnehmung im unteren Werkzeug derart ausgebildet sein, dass Schrumpfvorgänge während des Siegelns berücksichtigt werden.

Es ist daher die Aufgabe der vorliegenden Erfindung, eine Siegelstation bereitzustellen, die die Nachteile des Standes der Technik überwindet, bei der temperaturempfindliche Produkte wirksam ohne Beschädigung verarbeitet werden können, die das Schrumpfen der Bodenfolie im unteren Werkzeug berücksichtigt und bei der bei einer Änderung der napfförmigen Vertiefungen der Bodenfolie das untere Werkzeug nicht gewechselt werden muss.

Diese Aufgabe wird durch die Merkmale des Anspruchs 1 gelöst. Vorteilhafte Ausführungsformen sind Gegenstand der Unteransprüche.

Erfindungsgemäß weist eine Siegelstation, insbesondere in einer Thermoformmaschine, zum Siegeln einer Deckfolie auf eine Form- bzw. Bodenfolie mit napfförmigen Vertiefungen zur Aufnahme von Produkten zwischen einem ersten Werkzeug und einem zweiten Werkzeug, wobei das zweite Werkzeug eine Ausnehmung zur Aufnahme der napfförmigen Vertiefungen der Bodenfolie aufweist, eine Belüftungseinrichtung auf, die im Bereich der Ausnehmung einen Einlasskanal und einen Auslasskanal aufweist, wobei während eines Siegelvorgangs zwischen der Bodenfolie und der Ausnehmung ein Belüftungsraum ausgebildet ist, und sich über den Einlasskanal eintretende Luft im Belüftungsraum an der Bodenfolie entlang bewegt und über den Auslasskanal austritt. Mit dem Belüftungsraum ist ein Bereich zwischen der napfförmigen Vertiefung der Bodenfolie und der Ausnehmung des unteren Werkzeugs gegeben, so dass die durch den Einlasskanal einströmende Luft die Oberfläche der napfförmigen Vertiefung weder beeinträchtigt noch verändert wird. Dadurch ist gewährleistet, dass für verschiedene Formen der napfförmigen Vertiefungen in der Bodenfolie ein und dasselbe Werkzeug verwendet werden kann. Dabei sind Schrumpfungen der Bodenfolie berücksichtigt, weil es bei der Belüftung nicht auf ein exaktes Anliegen der napfförmigen Vertiefungen der Bodenfolie in der Ausnehmung ankommt.

Vorteilhafterweise sind pro Ausnehmung mehrere Einlasskanäle und/oder mehrere Auslasskanäle vorgesehen.

Mit besonderem Vorteil ist die Belüftungseinrichtung geeignet, die Wärme von der Bodenfolie in den Ausnehmungen während des Siegelvorgangs auf die Luft im Belüftungsraum zu übertragen und abzuführen. Der Luftstrom, der über den Einlasskanal oder die Einlasskanäle zugeführt wird, ist folglich in der Lage, die durch den Wärmeübertrag von dem oberen Werkzeug auf den Folienverbund von Deck- und Bodenfolie übertragene Hitze von der Bodenfolie abzuführen, so dass ein Erwärmen des eingeschlossenen Produktes wirksam gemildert oder vollständig verhindert wird.

Bevorzugt ist eine Druckluftzuführung derart vorgesehen, dass bei Eintritt in den Belüftungsraum kein statischer Druck auf die Bodenfolie ausgeübt wird. Damit wird verhindert, dass sich aufgrund des zu starken Drucks die Ausnehmung in der Bodenfolie in ihrer Form verändert und/oder sogar gegebenenfalls das im Inneren befindliche Produkt beeinflusst wird. Durch die geeignete Wahl des Drucks der einströmenden Luft bildet sich somit kein statischer Druck auf die Oberfläche der Bodenfolie aus. Vielmehr bewegt sich die Luft im Belüftungsraum an der Oberfläche der Bodenfolie vorbei hin zu dem bzw. den Auslasskanälen und wirkt dabei Wärme übertragend.

Mit besonderem Vorteil sind im Einlasskanal Mittel vorgesehen, so dass die Luftströmung im Belüftungsraum turbulent ausgebildet ist. Dadurch wird eine möglichst große Kühlwirkung erzielt, denn eine turbulente Luftströmung weist eine höhere Wärmeübertragung auf die Bodenfolie und damit auf das zu kühlende Produkt auf als beispielsweise eine laminare Strömung. Die Turbulenzen können z.B. dadurch hervorgerufen werden, dass Wirbel erzeugende Gitter oder Fächer in dem Einlasskanal ausgebildet sind. Auch der Querschnitt des Einlasskanals kann dazu beitragen, dass die Turbulenzen erhöht sind, er muss nicht kreisrund oder rechteckig sein. Der Querschnitt kann sich über die Länge des Einlasskanals hin derart verändern, dass die Turbulenzwirkung vergrößert wird.

Insbesondere ist es vorteilhaft, das der Lufteintrittswinkel zwischen Einlasskanal und Ausnehmung kleiner als 90° besonders bevorzugt zwischen 30° und 70°. Im Vergleich mit einem Einlasswinkel von 90° führt ein schräger Einlasswinkel zu einer turbulenteren Strömung und damit zu einer besseren Kühlwirkung. Es ist im Rahmen der vorliegenden Erfindung ebenfalls möglich, dass der Einlasskanal bzw. die Einlasskanäle weder mittig noch symmetrisch an der Ausnehmung im unteren bzw. zweiten Werkzeug angeordnet sind. Weiterhin ist es vorteilhaft, dass der Auslasskanal bzw. die Auslasskanäle derart angeordnet sind, dass der Weg zwischen Einlasskanal und Auslasskanal im Belüftungsraum maximal ist. Durch den größeren Weg wird auch die Fläche im Belüftungsraum vergrößert, entlang derer das Abführen von Wärme von der Bodenfolie die sich vorbeibewegende Luft ermöglicht.

In einer bevorzugten Ausführungsform ist die erfindungsgemäße Siegelstation als Plattensiegelstation ausgebildet. Die Zuführung von Deck- und Bodenfolie erfolgt dabei getaktet, und das untere Werkzeug weist mehrere Ausnehmungen zur Aufnahme der napfförmigen Vertiefungen der Bodenfolie auf. Dabei ist es besonders bevorzugt, dass jeder Einlasskanal mit einer gemeinsamen Mittelkammer verbunden ist, die von einer Druckluftquelle gespeist ist. Dies sorgt für eine gleichmäßige Druckverteilung. Zudem kann mit einer einzigen Druckluftquelle die gesamte Kühlung des unteren Werkzeugs bewerkstelligt werden.

Alternativ ist es vorteilhaft, wenn die erfindungsgemäße Siegelstation als Walzensiegelstation ausgebildet ist. Derartige Walzensiegelstationen sind dem Prinzip nach bekannt, die Besonderheit liegt erfindungsgemäß jedoch darin, dass zusätzlich zur Wasserkühlung der Bodenwalze diese auch über eine Belüftung verfügt, die erfindungsgemäß auf der Siegellinie und für einen vorbestimmten Weg danach für die Kühlwirkung sorgt.

Die Erfindung wird in der nachfolgenden Beschreibung unter Bezugnahme auf die beigefügten Zeichnungen erläutert, in denen
- Fig. 1: eine Querschnittsseitenansicht einer bevorzugten Ausführungsform der erfindungsgemäßen Siegelstation in geöffneten Zustand zeigt;
- Fig. 2: eine Querschnittsseitenansicht der bevorzugten Ausführungsform aus Fig. 1 im geschlossenen, d. h. im Siegelzustand zeigt;
- Fig. 3: einen Detailausschnitt der in Fig. 2 dargestellten Ausführungsform der erfindungsgemäßen Siegelstation zeigt.

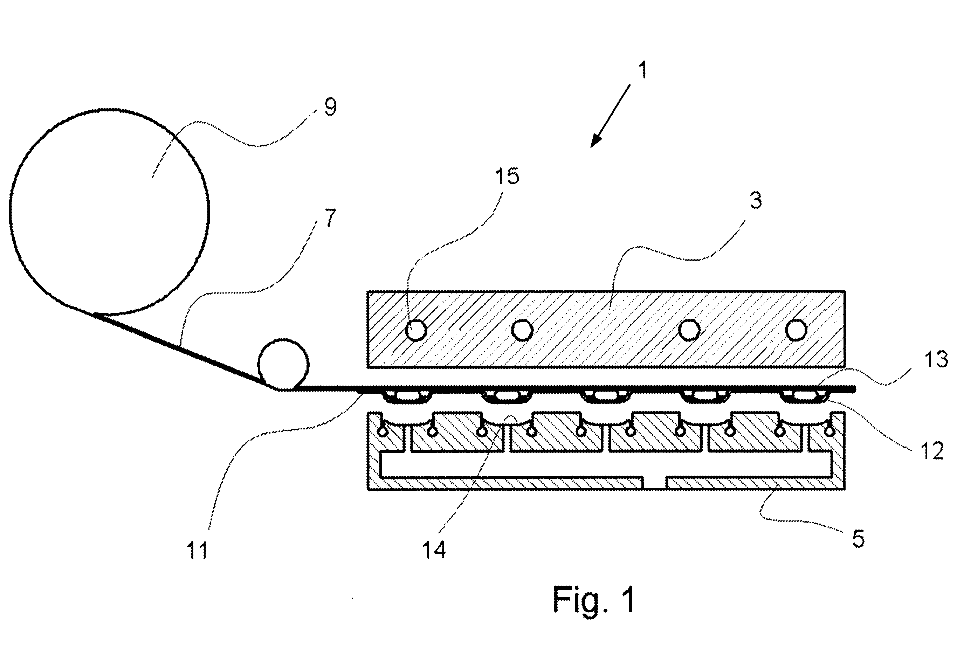

Fig. 1 zeigt eine Querschnittsseitenansicht einer bevorzugten Ausführungsform der erfindungsgemäßen Siegelstation im offenen Zustand. Dargestellt ist eine Plattensiegelstation 1 mit einem ersten oder oberen Werkzeug 3 und einem zweiten oder unteren Werkzeug 5, die parallel übereinander angeordnet sind und zwischen denen sich eine von einer Deckfolienrolle 9 abgewickelte Deckfolie 7 sowie eine direkt darunter liegende Bodenfolie oder Formfolie 11 erstreckt. Die Bodenfolie 11 weist napfförmige Vertiefungen 12 auf, in denen sich jeweils ein zu versiegelndes Produkt 13 befindet. Das obere Werkzeug 3 wird mittels Heizpatronen 15 auf eine vorbestimmte Siegeltemperatur erhitzt. Das untere Werkzeug 5 wird üblicherweise durch eine (nicht dargestellte) Wasserkühlung auf einer zweiten, vorbestimmten Kühltemperatur gehalten. Die entsprechenden Temperaturen werden von (nicht dargestellten) Steuergeräten in geeigneter Weise eingestellt und geregelt, so dass stets eine optimale Siegelwirkung erzielt wird und der versiegelte Formverbund aus Deckfolie 7 und Bodenfolie 11 eine Temperaturschwelle nicht überschreitet. Das obere Werkzeug 3 sowie das untere Werkzeug 5 werden in der dargestellten Ausführungsform durch (nicht gezeigte) geeignete Antriebe auf und ab bewegt entsprechend der Taktung der Plattensiegelstation 1, wobei hier fünf hintereinander angeordnete Reihen mit den napfförmigen Vertiefungen 11 zur Aufnahme der Produkte 13 in einem Siegelvorgang versiegelt werden. Die Anordnung der napfförmigen Vertiefungen ist demnach zweidimensional.

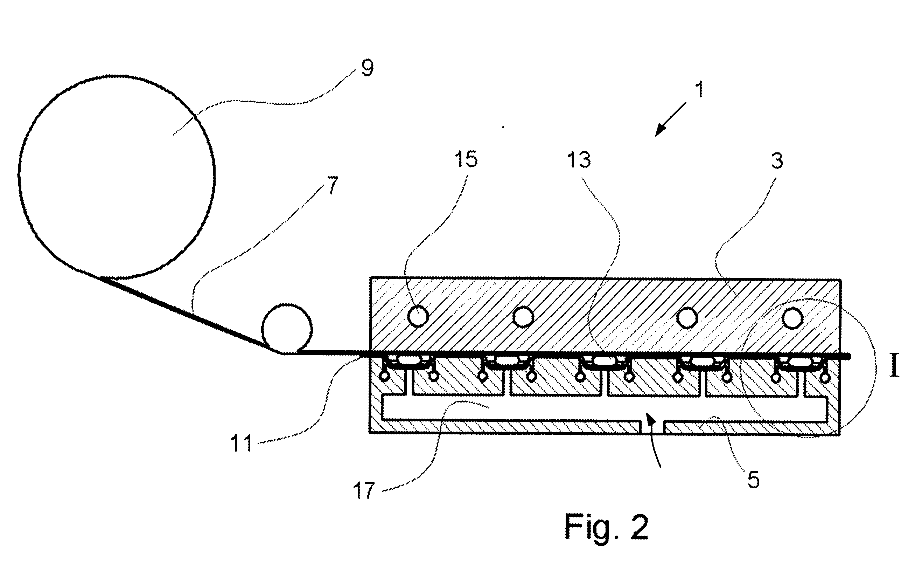

Fig. 2 zeigt die Plattensiegelstation 1 aus Fig. 1 in geschlossenem Zustand, d. h. zu dem Zeitpunkt, wo Deckfolie 7 und Bodenfolie 11 zu einem Folienverbund miteinander versiegelt werden. Dazu werden das obere Werkzeug 3 und das untere Werkzeug 5 aufeinander zu bewegt und für einen vorbestimmten Zeitraum, der Siegelzeit, in der dargestellten Position gehalten, wobei die untere Seite des oberen Werkzeugs die Deckfolie 7 auf die auf der oberen Seite des unteren Werkzeugs 5 anliegende Bodenfolie 11 presst. Die Temperatur des oberen Werkzeugs 3 wird auf die Deckfolie 7 übertragen, die in üblicher Weise aus hartem Aluminium, Aluminium definierter Härte oder einer mit Papier oder Kunststoff kaschierten Aluminiumfolie besteht. Durch das Aufpressen der Deckfolie 7 auf die Bodenfolie 11 und deren teilweises Verschmelzen entsteht ein Folienverbund, in dem es aufgrund der Eigenschaften der Folienmaterialien zu einer Übertragung von Wärmeenergie auf die Bodenfolie 11 kommt. Das Material der Bodenfolie ist üblicherweise PVC, PVC-PVDC oder PVC-ACLAR, es können aber auch andere Materialien verwendet werden wie beispielsweise Aluminium-Verbundfolien, COC, PS, PP oder PET. Je höher die Wärmeleitfähigkeit des Bodenfolienmaterials, desto höher ist auch der Wärmeübertrag.

Wie bereits erwähnt, handelt es sich bei der bevorzugten Ausführungsform, die in den Figuren dargestellt ist, um eine Plattensiegelstation, in der eine getaktete Versiegelung stattfindet. Nach dem erneuten Öffnen aus dem in Fig. 2 dargestellten geschlossenen Zustand wird der versiegelte und entsprechend erwärmte Folienverbund einer Kühlstation zugeführt.

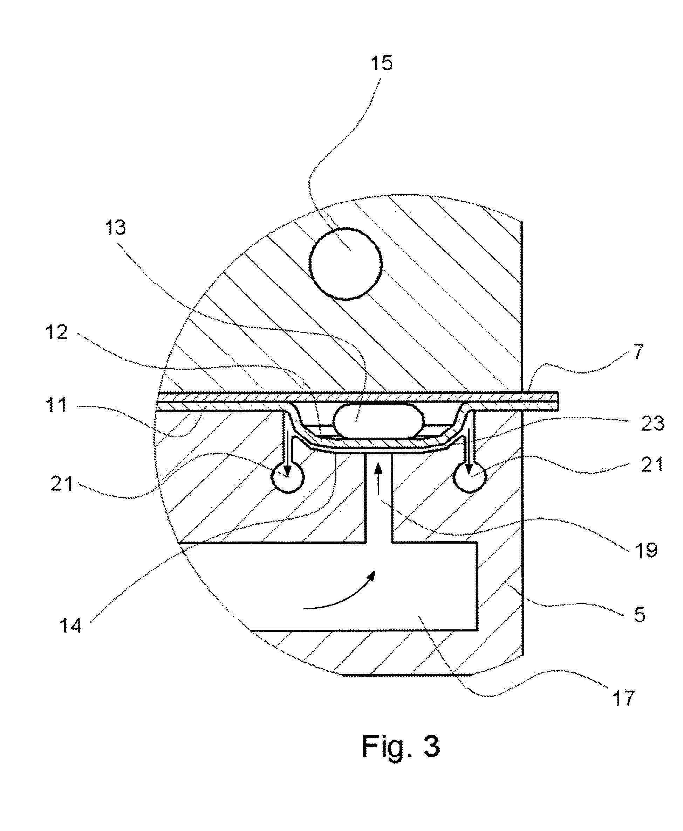

Fig. 3 zeigt den mit "I" bezeichneten Ausschnitt aus Fig. 2 in vergrößerter Darstellung. Anhand von Fig. 3 wird im Folgenden die Funktionsweise der erfindungsgemäßen Siegelstation detailliert erläutert. In dem unteren Werkzeug 5 ist ein zentraler Mittelkanal 17 ausgebildet, von dem sich ein Einlasskanal 19 zu jeder Ausnehmung 14 hin erstreckt. Die Kontur der Ausnehmung 14 ist an der Kontur der napfförmigen Vertiefung 12 der Bodenfolie 11 orientiert. Hierbei ist anzumerken, dass eine exakte Entsprechung der Kontur der Ausnehmung 14 mit der Kontur der napfförmigen Vertiefung 12 zwar wünschenswert, im Sinne einer kostengünstigen Fertigung und aufgrund der Schrumpfung der Bodenfolie 11 jedoch nicht möglich ist. Zwischen der Ausnehmung 14 und der darin befindlichen napfförmigen Vertiefung 12 der Bodenfolie 11 ist ein Belüftungsraum 23 ausgebildet, der sich über die gesamte Fläche der Ausnehmung 14 erstreckt. Die Ausnehmung 14 seitlich begrenzend sind Auslasskanäle 21 in dem unteren Werkzeug 5 ausgebildet.

Von einer (nicht dargestellten) Druckluftquelle wird Druckluft dem Mittelkanal 17 zugeführt, die pro Ausnehmung 14 im Einlasskanal 19 auf den Belüftungsraum 23 trifft. Es ist anzumerken, dass im Belüftungsraum 23 kein statischer Druck durch die eingeführte Luft auf die napfförmigen Vertiefungen 12 der Bodenfolie 11 vorliegt, um die Bodenfolie 11 nicht zu verformen oder zu beschädigen. Dies ist deshalb von Bedeutung, da eine Verformung bzw. Beschädigung der Bodenfolie 11 aus Qualitätsgründen inakzeptabel ist. Vielmehr bewegt sich der Luftstrom als turbulenter Luftstrom in dem Belüftungsraum 23 von dem Einlasskanal 19 hin zu den Auslasskanälen 21. Dabei wird die in der Bodenfolie 11 vorhandene Wärme, die sich durch die Siegelung von dem oberen Werkzeug 3 über die Deckfolie 7 überträgt, wiederum auf die vorbeibewegte Luft übertragen und abgeführt. Dadurch kommt es zu einer Abkühlung der Bodenfolie 11 im Bereich des Belüftungsraumes 23. Dies wiederum hat zur Folge, dass sich auch das zwischen Deck- und Bodenfolie befindliche Produkt 13 abkühlt und damit vor Beschädigungen durch Erhitzung geschützt ist.

In der dargestellten Ausführungsform ist pro Ausnehmung 14 nur ein Einlasskanal 19 dargestellt, der in einem Winkel von 90° auf die Ausnehmung 14 trifft. Es ist von besonderem Vorteil, wenn der Auftreffwinkel des Einlasskanals 19 auf die Ausnehmung 14 nicht genau 90°, sondern beispielsweise zwischen 30° und 70° beträgt. Dies führt zu einer stärkeren Turbulenz der Luftströmung und dadurch zu einer größeren Wärmeübertragungswirkung von der Deckfolie 11 auf die sich vorbeibewegende Luft. Auch ist es möglich, dass mehrere Einlasskanäle 19 pro Ausnehmung 14 vorhanden sind. Dasselbe gilt für die Auslasskanäle, d. h. es können einer oder mehrere Auslasskanäle 21 pro Ausnehmung 14 vorhanden sein. Auf diese Weise kann bei Zuführung von komprimierter Luft im Inneren des Werkzeugs 5 eine definierte Luftströmung in dem Belüftungsraum 23 erzeugt werden, deren Kühlwirkung je nach Bedarf bestimmbar ist. Für die Kühlwirkung ist auch die Temperatur der eingeströmten Luft entscheidend, demgemäß ist es denkbar, dass zur Erhöhung der Kühlwirkung stark gekühlte Pressluft verwendet wird. Darüber hinaus ist es möglich, auch nur bestimmte Gase wie z.B. Stickstoff oder komprimiertes Kohlendioxid zu verwenden oder zu der Pressluft hinzuzufügen, um die Kühlwirkung positiv zu beeinflussen.

Aus den obigen Erläuterungen ergibt sich, dass eine besonders große Kühlwirkung erzielt werden kann, wenn der Belüftungsraum eine möglichst große Fläche einnimmt, die die napfförmige Vertiefung 12 umgibt.

Alternativ zur dargestellten bevorzugten Ausführungsform der erfindungsgemäßen Siegelstation kann diese auch als Walzensiegelstation ausgebildet sein. Bei derartigen Walzensiegelstationen entspricht das obere Werkzeug der Siegelwalze und das untere Werkzeug der Bodenwalze. An der Siegellinie, d. h. an dem Ort, wo Siegelwalze und Bodenwalze aufeinander stoßen, werden zwischen den beiden Walzen die Deckfolie und die Bodenfolie hindurchgeführt und kontinuierlich miteinander versiegelt. Die Bodenwalze weist die Ausnehmungen in gleichmäßigem Abstand um ihren Umfang herum auf, in die sich die napfförmigen Vertiefungen der Bodenfolie entsprechend einpassen. Die zusätzliche Kühlung über die Wasserkühlung der Bodenwalze hinaus erfolgt über entsprechende Einlass- und Auslasskanäle an den Ausnehmungen in der Bodenwalze. Die Luftführung in der Bodenwalze gleicht prinzipiell der in Fig. 3 dargestellten Form. Die Luftkühlung wird ab dem Siegelpunkt aktiviert und hält an, bis der Folienverbund nach einem bestimmten Umschlingungswinkel die Bodenwalze wieder verlässt.

Mit der vorliegenden Erfindung wird eine Siegelstation bereitgestellt, bei der temperaturempfindliche Produkte wirksam ohne Beschädigung verarbeitet werden können und die das Schrumpfen der Bodenfolie im unteren Werkzeug berücksichtigt.

## Patentansprüche

1. Siegelstation (1), insbesondere in einer Thermoformmaschine, zum Siegeln einer Deckfolie (7) auf eine Form- bzw. Bodenfolie (11) mit napfförmigen Vertiefungen (12) zur Aufnahme von Produkten (13) zwischen einem ersten Werkzeug (3) und einem zweiten Werkzeug (5), wobei das zweite Werkzeug (5) eine Ausnehmung (14) zur Aufnahme der napfförmigen Vertiefungen (12) der Bodenfolie (11) aufweist,
mit einer Belüftungseinrichtung, die im Bereich der Ausnehmung (14) jeweils einen Einlasskanal (19) und einen Auslasskanal (21) aufweist,
wobei während eines Siegelvorgangs zwischen der Bodenfolie (11) und der Ausnehmung (14) ein Belüftungsraum (23) ausgebildet ist, und sich über den Einlasskanal (19) eintretende Luft im Belüftungsraum (23) an der Bodenfolie (11) entlang bewegt und über den Auslasskanal (21) austritt.

2. Siegelstation (1) nach Anspruch 1, **dadurch gekennzeichnet, dass** mehrere Einlasskanäle (19) und/oder mehrere Auslasskanäle (21) pro Ausnehmung (14) vorgesehen sind.

3. Siegelstation (1) nach einem der vorhergehenden Ansprüche, **dadurch gekennzeichnet, dass** die Belüftungseinrichtung geeignet ist, die Bodenfolie (11) in den Ausnehmungen (14) während des Siegelvorgangs zu kühlen.

4. Siegelstation (1) nach einem der vorhergehenden Ansprüche, **dadurch gekennzeichnet, dass** eine Druckluftzuführung derart vorgesehen ist, dass bei Eintritt in den Belüftungsraum (23) kein statischer Druck auf die Bodenfolie (11) ausgeübt wird.

5. Siegelstation (1) nach einem der vorhergehenden Ansprüche, **dadurch gekennzeichnet, dass** im Einlasskanal (19) Mittel vorgesehen sind, so dass die Luftströmung im Belüftungsraum (23) turbulent ausgebildet ist.

6. Siegelstation (1) nach einem der vorhergehenden Ansprüche, **dadurch gekennzeichnet, dass** der Lufteintrittswinkel zwischen Einlasskanal (19) und Ausnehmung (14) kleiner als 90°, bevorzugt zwischen 30°und 70° ist.

7. Siegelstation (1) nach einem der vorhergehenden Ansprüche, **dadurch gekennzeichnet, dass** der Auslasskanal (21) bzw. die Auslasskanäle derart angeordnet sind, dass der Weg zwischen Einlasskanal (19) und Auslasskanal (21) im Belüftungsraum (23) maximal ist.

8. Siegelstation (1) nach einem der vorhergehenden Ansprüche, **dadurch gekennzeichnet, dass** sie als Plattensiegelstation ausgebildet ist

9. Siegelstation (1) nach Anspruch 8, **dadurch gekennzeichnet, dass** jeder Einlasskanal (19) mit einer gemeinsamen Mittelkammer (17) verbunden ist, die von einer Druckluftquelle gespeist ist.

10. Siegelstation (1) nach einem der Ansprüche 1 bis 7, **dadurch gekennzeichnet, dass** sie als Walzensiegelstation ausgebildet ist.

## Claims

1. Sealing station (1), in particular in a thermoforming machine, for sealing a top sheet (7) to a forming or bottom sheet (11) with bowl-shaped depressions (12) for receiving products (13) between a first tool (3) and a second tool (5), the second tool (5) having a recess (14) for receiving the bowl-shaped depressions (12) in the bottom sheet (11), comprising a ventilation device which has an inlet duct (19) and an outlet duct (21) in the region of each recess (14), wherein, during a sealing process, a ventilation space (23) is constructed between the bottom sheet (11) and the recess (14), and air entering via the inlet duct (19) moves along the bottom sheet (11) in the ventilation space (23), exiting via the outlet duct (21).

2. Sealing station (1) according to claim 1, **characterised in that** a plurality of inlet ducts (19) and/or a plurality of outlet ducts (21) are provided per recess (14).

3. Sealing station (1) according to any of the preceding claims, **characterised in that** the ventilation device is capable of cooling the bottom sheet (11) in the recesses (14) during the sealing process.

4. Sealing station (1) according to any of the preceding claims, **characterised in that** a compressed air supply is provided in such a way that when it enters the ventilation space (23), no static pressure is exerted on the bottom sheet (11).

5. Sealing station (1) according to any of the preceding claims, **characterised in that** means are provided in the inlet duct (19) to render turbulent the air flow in the ventilation space (23).

6. Sealing station (1) according to any of the preceding claims, **characterised in that** the air entry angle between an inlet duct (19) and a recess (14) is smaller than 90° and preferably between 30 ° and 70°.

7. Sealing station (1) according to any of the preceding claims, **characterised in that** the outlet duct (21) or outlet ducts is/are arranged so as to ensure the maximum path between inlet duct (19) and outlet duct (21) in the ventilation space (23).

8. Sealing station (1) according to any of the preceding claims, **characterised in that** it is constructed as a plate sealing station.

9. Sealing station (1) according to claim 8, **characterised in that** each inlet duct (19) is connected to a common central chamber (17), which is fed from a compressed air source.

10. Sealing station (1) according to any of claims 1 to 7, **characterised in that** it is constructed as a roller sealing station.

## Revendications

1. Poste de scellement (1), notamment dans une machine de thermoformage, pour sceller une feuille de couverture (7) sur une feuille de forme ou feuille de base (11) qui comporte des cavités (12) en forme de godets pour accueillir des produits (13), entre un premier outil (3) et un second outil (5), le second outil (5) présentant un évidement (14) servant à accueillir les cavités (12) en forme de godets de la feuille de base (11),
comportant un dispositif d'aération qui présente dans la zone de chaque évidement (14) un canal d'amenée (19) et un canal de sortie (21),
en sorte que, pendant une opération de scellement, il est formé entre la feuille de base (11) et chaque évidement (14) un espace d'aération (23) et que l'air entrant par le canal d'amenée (19) dans l'espace d'aération (23) se déplace le long de la feuille de base (11) et s'évacue par le canal de sortie (21).

2. Poste de scellement (1) selon la revendication 1, **caractérisé en ce que** sont prévus, pour chaque évidement (14), plusieurs canaux d'amenée (19) et/ou plusieurs canaux de sortie (21).

3. Poste de scellement (1) selon la revendication 1 ou 2, **caractérisé en ce que** le dispositif d'aération est conçu pour refroidir la feuille de base (11) dans les évidements (14), pendant l'opération de scellement.

4. Poste de scellement (1) selon l'une des revendications précédentes, **caractérisé en ce qu'**une amenée d'air sous pression est prévue de manière qu'en entrant dans l'espace d'aération (23), aucune pression statique ne soit exercée sur la feuille de base (11).

5. Poste de scellement (1) selon l'une des revendications précédentes, **caractérisé en ce que** dans le canal d'amenée (19) sont prévus des moyens faisant que l'écoulement d'air dans l'espace d'aération (23) est turbulent.

6. Poste de scellement (1) selon l'une des revendications précédentes, **caractérisé en ce que** l'angle d'entrée de l'air entre le canal d'amenée (19) et l'évidement (14) est inférieur à 90°, de préférence compris entre 30° et 70°.

7. Poste de scellement (1) selon l'une des revendications précédentes, **caractérisé en ce que** le canal de sortie (21) ou les canaux de sortie sont disposés de manière que le trajet entre le canal d'amenée (19) et le canal de sortie (21) dans l'espace d'aération (23) est maximal.

8. Poste de scellement (1) selon l'une des revendications précédentes, **caractérisé en ce qu'**il est constitué par un poste à plaques de scellement.

9. Poste de scellement (1) selon la revendication 8, **caractérisé en ce que** chacun des canaux d'amenée (19) est relié à une chambre médiane (17) commune, qui est alimentée par une source d'air comprimé.

10. Poste de scellement (1) selon la revendication 7 ou 8, **caractérisé en ce qu'**il est constitué par un poste à cylindres de scellement.
